# EUROPÄISCHE PATENTSCHRIFT

(11) **EP 0 857 906 B1**
(45) Veröffentlichungstag und Bekanntmachung des Hinweises auf die Patenterteilung: **08.01.2003**
(21) Anmeldenummer: 97118004.7
(22) Anmeldetag: 17.10.1997
(51) Int. Cl.: F16L 33/207, F16L 21/00, F16L 13/14

(54) **Vorrichtung zur Klemmverbindung von Rohrleitungselementen**
Device for making crimped connections in piping elements
Dispositif de fixation par serrage pour éléments de tuyauterie

(30) Priorität: 07.02.1997 DE 29701990 U; 27.02.1997 DE 29703551 U
(43) Veröffentlichungstag der Anmeldung: 12.08.1998
(73) Patentinhaber: Mair, Gottfried, 94474 Vilshofen (DE)
(72) Erfinder: Mair, Gottfried, 94474 Vilshofen (DE)
(74) Vertreter: Gustorf, Gerhard, Dipl.-Ing.

(56) Entgegenhaltungen:
- US-A- 4 226 446
- US-A- 4 407 532
- US-A- 4 923 226

## Beschreibung

Die Erfindung betrifft eine Vorrichtung zur Klemmverbindung von Rohrleitungselementen nach dem Oberbegriff des Patentanspruchs 1.

In Heizungs- und Sanitäranlagen werden Rohre aus Metall, Kunststoff oder Verbundwerkstoffen verwendet, die bei der Installation der Anlage mit den jeweils benötigten Armaturen und Fittingen druckdicht verbunden werden müssen. Zu diesem Zweck dienen plastisch verformbare, zylindrische Preßhülsen, die im Verbindungsbereich auf das Rohrende aufgesetzt werden, wonach die Verpressung mit Hilfe eines Preßwerkzeugs erfolgt, dessen Backen die Preßhülse an mehreren Stellen ringförmig in das Rohrende eindrücken, so daß eine axial feste, kraft- und formschlüssige Verbindung zustande kommt.

Die Verwendung einer zylindrischen Preßhülse hat sich vielfach als nachteilig herausgestellt, da diese insbesondere bei vertikal verlegten Rohren vor und während der Verpressung verrutschen kann, so daß vor allem bei Überkopfarbeiten fehlerhafte oder sogar unbrauchbare Preßstellen erzeugt werden, die manchmal nicht sofort erkannt werden, so daß im anschließenden Betrieb Undichtigkeiten auftreten. Hinzu kommt, daß nach dem Einschieben des Preßfittings in das Rohrende an schwierig zugänglichen Stellen eine Sichtkontrolle unmöglich ist, um festzustellen, ob das Rohrende mit der Preßhülse axial bis zum Anschlag des Preßfittings vorgeschoben wurde. Nicht zuletzt wird durch die zylindrische Preßhülse keinerlei Führung zur Verfügung gestellt, die eine axial definierte Anlage der Backen des Preßwerkzeugs zum Preßfitting garantiert.

Eine Vorrichtung mit den Merkmalen des Oberbegriffs des Patentanspruchs 1 ist aus der US-A 4 226 446 bekannt. Allerdings hat dort die Preßhülse an einem Rand einen radial nach innen gerichteten Flanschvorsprung, der in eine Ringnut des Preßfittings eingreift, wodurch Preßhülse und Fitting vor dem Verpressen mit dem Rohrende zu einer Einheit verbunden werden.

Der Erfindung liegt die Aufgabe zugrunde, ein System zur Verfügung zu stellen, mit dessen Hilfe die genannten Nachteile sicher vermieden werden können, so daß beim Verpressen sichergestellt ist, daß sich die Preßhülse in ihrer axial definierten Endstellung auf dem Rohrende befindet und die Backen des Preßwerkzeugs an der vorgegebenen Stelle der Preßhülse angreifen.

Bei einer Vorrichtung zur Klemmverbindung der eingangs umrissenen Bauart wird diese Aufgabe erfindungsgemäß durch die Merkmale im kennzeichnenden Teil des Patentanspruchs 1 gelöst. Vorteilhafte Weiterbildungen sind Gegenstand der abhängigen Ansprüche.

Gegenüber den bisher verwendeten, aus glatten Rohrabschnitten bestehenden Preßhülsen hat die Erfindung den wesentlichen Vorteil, das die Preßhülse mit ihrem radial nach innen verengten Rand, der konisch ausgebildet oder radial nach innen umgebördelt sein kann, eine Anlageschulter bildet, die sicherstellt, daß sich die Preßhülse nach dem Aufsetzen auf das Rohrende in ihrer axialen Endstellung befindet.

Durch den als Fenster wirkenden Sichtkontrollschlitz kann nach dem Aufsetzen der Preßhülse auf das Rohrende visuell sicher festgestellt werden, ob sich die Preßhülse in ihrer axialen Endanschlagstellung auf dem Rohrende befindet. Diese Sichtkontrolle kann auch nach dem Einschieben des Fittings oder der Rohrarmatur wiederholt werden, so daß anschließend eine fehlerfreie Verpressung gewährleistet ist.

Eine wesentliche Verbesserung kann dadurch erreicht werden, daß die Preßhülse zwei umlaufende Sicken hat, deren axialer Abstand der Breite des Preßwerkzeugs entspricht. Auf diese Weise steht eine axial definierte Anlagefläche für die Backen des Preßwerkzeugs zur Verfügung. Ein weiterer Vorteil besteht darin, daß die Sicken biem Verpressen ein unerwünschtes Abfließen des Rohrmaterials nach außen weitgehend verhindern, so daß die Enden der Preßhülse sich nach außen hin nicht konisch erweitern (auftulpen) können.

Die Erfindung ist nachstehend an Ausführungsbeispielen erläutert, die in der Zeichnung dargestellt sind. Es zeigen:
Figur 1 einen Längsschnitt durch eine Preßhülse,
Figur 2 die Darstellung der auf ein Rohrende aufgeschobenen Preßhülse der Figur 1,
Figur 3 eine Schnittdarstellung des Rohrendes nach dem Einschieben eines Preßfittings und während der Verpressung durch eine Preßzange.
Figur 4 die Ansicht eines Beispiels eines Preßfittings mit zwei angedeuteten Rohrenden, die mit dem Preßfitting zu verbinden sind,
Figur 5 die Ansicht eines Preßfittings vor dem Einsetzen in ein Rohrende, auf das die Preßhülse aufgeschoben ist,
Figur 6 die Ansicht eines geöffneten Preßwerkzeugs, zwischen dessen Backen das entsprechend Figur 3 vorbereitete Rohrende eingesetzt wird,
Figur 7 das Preßwerkzeugs während des Preßvorgangs,
Figur 8 das Preßwerkzeug mit geöffneten Preßbacken beim Herausnehmen des verpreßten Rohrendes,
Figur 9 eine Variante der Figur 1 und
Figur 10 die Teildarstellung einer weiteren Variante.

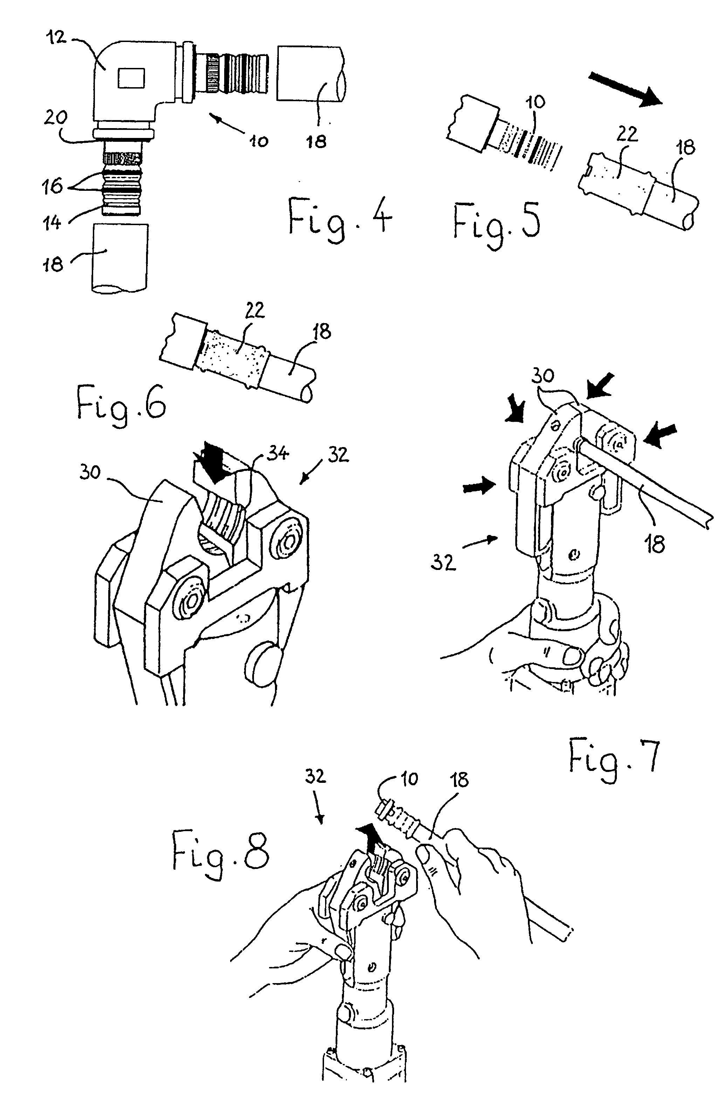

Am Beispiel der Figur 4 ist ein Preßfitting 10 in Form eines Winkelstücks 12 gezeigt, das beispielsweise aus Messing hergestellt ist und zwei Anschlußstutzen 14 mit O-Ringen 16 aufweist. Auf die beiden Anschlußstutzen 14 soll jeweils ein Rohrende 18 aufgesetzt werden, das nach dem Aufschieben bis zu einem Trennring 20 mit dem Anschlußstutzen 14 verpreßt werden soll.

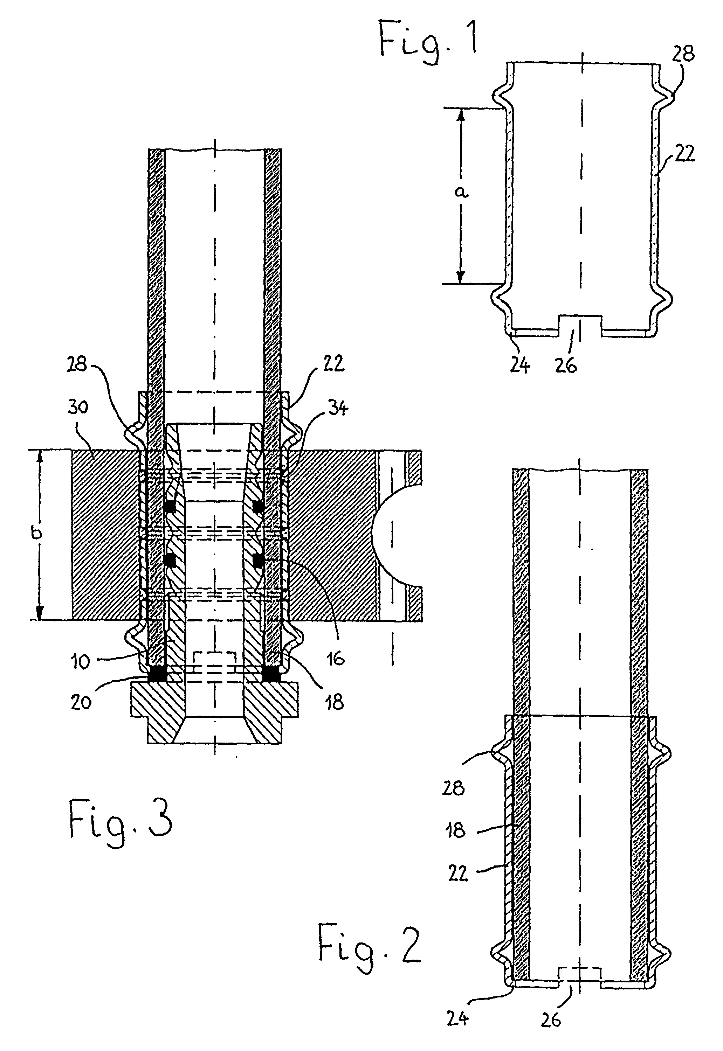

Für die Klemmverbindung des Rohrendes 18 auf dem Fitting 10 dient eine gemäß der Erfindung ausgebildete Preßhülse 22, die in einem ersten Beispiel in Figur 1 gezeigt ist. Die im wesentlichen zylindrisch ausgebildete Preßhülse 22 besteht aus einem plastisch verformbaren Material, beispielsweise Edelstahl. An einem Ende ist die Preßhülse 22 verengt und hat hierzu einen radial nach innen umgebördelten Rand 24, der nach dem Aufschieben der Preßhülse 22 auf das Rohrende 18 gemäß Figur 2 axial an diesem Rohrende zum Anschlag kommt. Im Bereich des umgebördelten Randes 24 sind in die Preßhülse 22 zwei diametral gegenüberliegende Sichtkontrollschlitze 26 eingeschnitten, die zum freien Ende der Preßhülse 22 axial offen sind. Damit ist es möglich, nach dem Aufschieben der Preßhülse 22 auf das Rohrende 18 den definierten Sitz in der axialen Endstellung festzustellen.

Die Figuren 1 bis 3 zeigen weiter, daß die Preßhülse 22 zwei umlaufende Sicken 28 hat, deren axialer Abstand a der Breite b der Klemmbacken 30 (Figur 3) eines in den Figuren 6 bis 8 gezeigten Preßwerkzeugs 32 entspricht.

Nachdem die Preßhülse 22 gemäß Figur 2 auf das Rohrende 18 bis zum Anschlag durch den umgebördelten Rand 24 aufgeschoben worden ist, wird gemäß Figur 3 das Fitting 10 in das Rohrende 18 eingesetzt. Dabei ist darauf zu achten, daß die O-Ringe 16 in ihrem Sitz bleiben und nicht verletzt werden. Das Fitting 10 wird bis zum Anschlag an dem Trennring 20 in das Rohrende 18 geschoben. Durch die beiden Sichtkontrollschlitze 26 ist zu erkennen, ob das Rohrende 18 bis zu dem Trennring 20 aufgeschoben ist.

Anschließend wird entsprechend Figur 6 das auf diese Weise vorbereitete Rohrende 18 zwischen die geöffneten Klemmbacken 30 des Preßwerkzeugs 32 gelegt, wobei die beiden umlaufenden Sicken 28 eine definierte Führung und Anlage für die Klemmbacken 30 bilden. Danach wird gemäß den Figuren 3 und 7 die Verpressung durchgeführt, wobei die beiden Klemmbacken 30 geschlossen werden. Die an der Innenseite der Klemmbacken 30 ausgebildeten Ringwülste 34 drücken dabei die Preßhülse 22 radial nach innen gegen das Fitting 10, wodurch eine druckdichte und axial unverrückbare Verbindung hergestellt wird.

Anschließend wird das Preßwerkzeug 32 geöffnet, so daß gemäß Figur 8 das Rohrende mit dem fixierten Fitting 10 freigegeben wird.

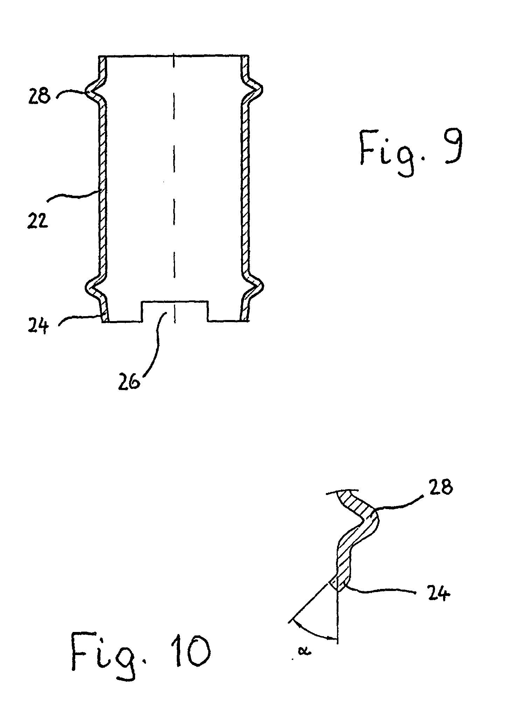

Figur 9 zeigt eine Variante der Figur 1, bei der der Rand 24 der Preßhülse 22 konisch verengt ist, was einfacher herzustellen ist als eine radiale Umbördelung, ohne daß die definierte axiale Anlage am Rohrende beeinträchtigt wird.

Im Ausführungsbeispiel der Figur 10 ist das Ende der Preßhülse 22 nur auf einer kurzen Länge des Randes 24 radial nach innen konisch verengt. Der eingezeichnete Winkel α liegt in der Größenordnung von 45°.

## Patentansprüche

1. Vorrichtung zur Klemmverbindung von Rohrleitungselementen mit einer plastisch verformbaren Preßhülse (22), die auf ein Rohrende (18) aufschiebbar ist, welches eine Rohrarmatur, ein Preßfitting (10) oder dergleichen aufnimmt, wobei die Preßhülse wenigstens eine umlaufende Sicke (28) zur definierten Anlage eines Preßwerkzeugs (32) aufweist, **dadurch gekennzeichnet, daß** die Preßhülse (22) einen axial an das Rohrende (18) ansetzbaren, radial nach innen verengten Rand (24) hat und daß in den Rand (24) wenigstens ein Sichtkontrollschlitz (26) eingeschnitten ist, der zum freien Ende der Preßhülse (22) axial offen ist.

2. Vorrichtung nach Anspruch 1, **dadurch gekennzeichnet, daß** der Rand (24) radial nach innen umgebördelt ist.

3. Vorrichtung nach Anspruch 1 oder 2, **dadurch gekennzeichnet, daß** die Preßhülse (22) zwei umlaufende Sicken (28) hat, die einen axialen Abstand (a) für die definierte Anlage des Preßwerkzeugs (32) haben.

## Claims

1. Device for making crimped connections of piping elements comprising a compression sleeve (22) suitable for plastic deformation, which may be slipped on a tube end (18) into which a pipe fitting, a press fitting (10) or the like is inserted, said compression sleeve having at least one circumferential bead (28) serving as precise abutting element for a press tool (32), **characterized in that** said compression sleeve (22) has a radially inward contracted edge (24) adapted to axially contact said tube end (18), and that at least one slot (26) for visual examination is cut in said edge (24), said slot, at the free end of the compression sleeve (22), having an axially open end.

2. Device according to claim 1 wherein said edge (24) is radially flanged to the inside.

3. Device according to claim 1 or 2 wherein said compression sleeve (22) has two circumferential beads (22) having an axial distance (a) for the precise positioning of the press tool (32).

## Revendications

1. Dispositif de fixation par serrage pour éléments de tuyauterie, comprenant un manchon de serrage (22) à déformation plastique apte à être glissé sur une extrémité (18) de tuyau dans laquelle est emmanché un raccord de robinetterie, un raccord de pression (10) ou un élément similaire, le manchon de serrage (22) présentant au moins une moulure circulaire pour le positionnement précise d'un outil de compression (32), **caractérisé par le fait que** le manchon de serrage (22) présente un collet (24) rabattu radialement vers l'intérieure pour venir s'appuyer axialement sur l'extrémité (18) du tuyau, au moins une fente (26) de contrôle visuel étant découpée dans le collet (24), ladite fente étant axialement ouverte vers l'extrémité libre du manchon de serrage (22).

2. Dispositif selon la revendication 1, **caractérisé par le fait que** le collet (24) est bordelé radialement vers l'intérieur.

3. Dispositif selon la revendication 1 ou 2, **caractérisé par le fait que** le manchon de serrage (22) présente deux moulures circulaires (28) positionnées à une distance axiale (a) pour le positionnement de l'outil de compression (32).
